# EUROPÄISCHE PATENTANMELDUNG

(11) **EP 4 814 459 A1**
(43) Veröffentlichungstag der Anmeldung: **30.09.2026**
(21) Anmeldenummer: 26162980.2
(22) Anmeldetag: 06.03.2026
(51) Int. Cl.: G01L 9/00, G01L 19/14

(54) **DRUCKSENSOR**

(30) Priorität: 27.03.2025 EP 25166692
(71) Anmelder: Kistler Holding AG, 8408 Winterthur (CH)
(72) Erfinder: Mueller, Michael, 8252 Schlatt (CH)

(57) **Zusammenfassung**

Die Erfindung betrifft einen Drucksensor zur Messung des Druckes eines Mediums in einem Druckraum; welcher Druckraum von einer Wandung druckdicht umschlossen ist, welche Wandung eine Messbohrung aufweist, welche Messbohrung von ausserhalb des Druckraumes bis zum Druckraum reicht; welcher Drucksensor ein Gehäuse, ein Stempelelement und ein Messelement aufweist; welches Gehäuse einen Gehäuseraum und eine Gehäuseöffnung aufweist; welches Stempelelement und welches Messelement im Gehäuseraum angeordnet sind; welcher Drucksensor an der Messbohrung montierbar ist, welches Gehäuse im montierten Zustand des Drucksensors mit einem druckraumnahen Gehäuseende von ausserhalb des Druckraumes in die Messbohrung ragt, welche Gehäuseöffnung am druckraumnahen Gehäuseende angeordnet ist; welches Stempelelement sich im Gehäuseraum in einer Längsrichtung des Drucksensors zur Gehäuseöffnung erstreckt, welcher Druck durch die Gehäuseöffnung auf das Stempelelement wirkt, welches Stempelelement mit dem Messelement in Wirkverbindung steht und den Druck auf das Messelement überträgt; mit einem Gehäusespalt, welcher sich im Gehäuseraum in der Längsrichtung zwischen dem Gehäuse und dem Stempelelement erstreckt; wobei der Drucksensor mindestens ein Folienelement aufweist, welches Folienelement am druckraumnahen Gehäuseende befestigt ist und welches Folienelement den Gehäusespalt gegen ein Eindringen von Medium verschliesst.

## Beschreibung

### Technisches Gebiet

Die Erfindung betrifft einen Drucksensor nach dem Oberbegriff des unabhängigen Anspruches.

### Stand der Technik

Drucksensoren werden in den unterschiedlichsten technischen Anwendungen eingesetzt. Die Schrift WO2006/032152A1 zeigt einen Drucksensor zur Messung eines in einem Druckraum eines Spritzgiesswerkzeuges oder eines Verbrennungsmotors herrschenden Druckes. Der Drucksensor weist ein Gehäuse, einen Stempel und ein Messelement auf. Das Gehäuse weist einen Gehäuseraum auf, in welchem Gehäuseraum der Stempel und das Messelement angeordnet sind. Über das Gehäuse lässt sich der Drucksensor in einer Messbohrung einer Wandung des Druckraumes befestigen. Im in der Messbohrung befestigten Zustand des Drucksensors ragt der Stempel mit einem ersten Ende aus dem Gehäuse in den Druckraum. Mit einem zweiten Ende steht der Stempel mit dem Messelement in Wirkverbindung. Der zu messende Druck wird so über den Stempel auf das Messelement übertragen.

Das sich im Druckraum befindende Medium ist bei einem Spritzgiesswerkzeug eine flüssige Schmelze aus Kunststoff, Metall, usw. oder bei einem Verbrennungsmotor ein Kraftstoff-Luft-Gemisch. Das Medium kann eine Temperatur von mehreren hundert °C und einen Druck von mehreren hundert bar haben. Für eine hohe Empfindlichkeit des Drucksensors bei der Messung des Druckes, ist der Stempel bezüglich des Gehäuses beweglich angeordnet, was durch einen Ringspalt zwischen dem Gehäuse und dem Stempel realisiert ist. Und um zu verhindern, dass das Medium durch den Ringspalt in den Gehäuseraum eindringt und dort das Messelement beschädigt oder zerstört, lehrt die Schrift WO2006/032152A1, im Ringspalt eine metallische Ringmembran anzuordnen, welche Ringmembran am Stempel und am Gehäuse durch eine Schweissverbindung angebracht ist und den Ringspalt abdichtet.

Die Schweissverbindung der Ringmembran stellt allerdings einen Kraftnebenschluss dar, über welchen Kraftnebenschluss ein Teil des zu messenden Druckes vom Stempel in das Gehäuse abgeleitet wird und so die Empfindlichkeit des Drucksensors bei der Messung des Druckes reduziert. Insbesondere bei hohen Drücken von über 1000 bar ist die Ringmembran zur Gewährleistung einer hohen Lebensdauer dick ausgestaltet und bildet dann einen merklichen Kraftnebenschluss. Auch bildet die mit dem Gehäuse und dem Stempel verschweisste Ringmembran ein Schwing-System und wird bei der Druckmessung zu Schwingungen angeregt, welche Schwingungen die Messung des Druckes verfälschen können. Schliesslich ist der Ort der Schweissverbindung der Ringmembran im Ringspalt mit einem Schweisswerkzeug nur schwer zu erreichen, was die Fertigung der Schweissverbindung aufwändig und teuer macht.

Die vorliegende Erfindung stellt sich die Aufgabe, einen Drucksensor bereitzustellen, welcher den zu messenden Druck mit hoher Empfindlichkeit und hoher Genauigkeit misst. Insbesondere soll der Drucksensor auch hohe Drücke von über 1000 bar mit hoher Empfindlichkeit und hoher Genauigkeit messen können.

### Darstellung der Erfindung

Diese Aufgabe wird durch die Merkmale des unabhängigen Anspruches gelöst.

Die Erfindung betrifft einen Drucksensor zur Messung des Druckes eines Mediums in einem Druckraum; welcher Druckraum von einer Wandung druckdicht umschlossen ist, welche Wandung eine Messbohrung aufweist, welche Messbohrung von ausserhalb des Druckraumes bis zum Druckraum reicht; welcher Drucksensor ein Gehäuse, ein Stempelelement und ein Messelement aufweist; welches Gehäuse einen Gehäuseraum und eine Gehäuseöffnung aufweist; welches Stempelelement und welches Messelement im Gehäuseraum angeordnet sind; welcher Drucksensor an der Messbohrung montierbar ist, welches Gehäuse im montierten Zustand des Drucksensors mit einem druckraumnahen Gehäuseende von ausserhalb des Druckraumes in die Messbohrung ragt, welche Gehäuseöffnung am druckraumnahen Gehäuseende angeordnet ist; welches Stempelelement sich im Gehäuseraum in einer Längsrichtung des Drucksensors zur Gehäuseöffnung erstreckt, welcher Druck durch die Gehäuseöffnung auf das Stempelelement wirkt, welches Stempelelement mit dem Messelement in Wirkverbindung steht und den Druck auf das Messelement überträgt; mit einem Ringspalt, welcher sich im Gehäuseraum in der Längsrichtung zwischen dem Gehäuse und dem Stempelelement erstreckt; wobei der Drucksensor mindestens ein Folienelement aufweist, welches Folienelement am druckraumnahen Gehäuseende befestigt ist und welches Folienelement den Ringspalt gegen ein Eindringen von Medium verschliesst.

Im Unterschied zur Lehre der Schrift WO2006/032152A1, wird der Ringspalt durch das Folienelement für das Medium verschlossen, so dass im Betrieb des Drucksensors kein Medium in den Ringspalt eindringen kann. Somit wird insbesondere verhindert, dass bei hohen Drücken von über 1000 bar Medium in den Ringspalt eindringt und sich dort absetzen kann. Denn das im Ringspalt abgesetzte Medium kann am Stempel haften und die Beweglichkeit des Stempels beeinträchtigen. Die beeinträchtigte Beweglichkeit des Stempels wiederum reduziert die Empfindlichkeit des Drucksensors.

Vorteilhafte Weiterbildungen des Erfindungsgegenstandes werden in den abhängigen Ansprüchen beansprucht.

### Kurze Beschreibung der Zeichnungen

Im Folgenden wird die Erfindung beispielhaft anhand der Figuren näher erklärt. Es zeigen
- Fig. 1: einen Querschnitt durch einen Teil einer ersten Ausführungsform eines erfindungsgemässen Drucksensors 10 mit einem scheibenförmigen Folienelement 14, welches an einem druckraumnahen Gehäuseende 11.2 und an einem Stempelelement 12 befestigt ist;
- Fig. 2: einen Querschnitt durch einen Teil einer zweiten Ausführungsform eines erfindungsgemässen Drucksensors 10 mit einem scheibenförmigen Folienelement 14', welches nur am druckraumnahen Gehäuseende 11.2 befestigt ist; und
- Fig. 3: einen Querschnitt durch einen Teil einer dritten Ausführungsform eines erfindungsgemässen Drucksensors 10 mit einem ringförmigen Folienelement 14', welches am druckraumnahen Gehäuseende 11.2 und am Stempelelement 12 befestigt ist und zusätzlich mit einem Dichtelement 15.

Gleiche Bezugszeichen bezeichnen in den Figuren gleiche Gegenstände.

### Wege zur Ausführung der Erfindung

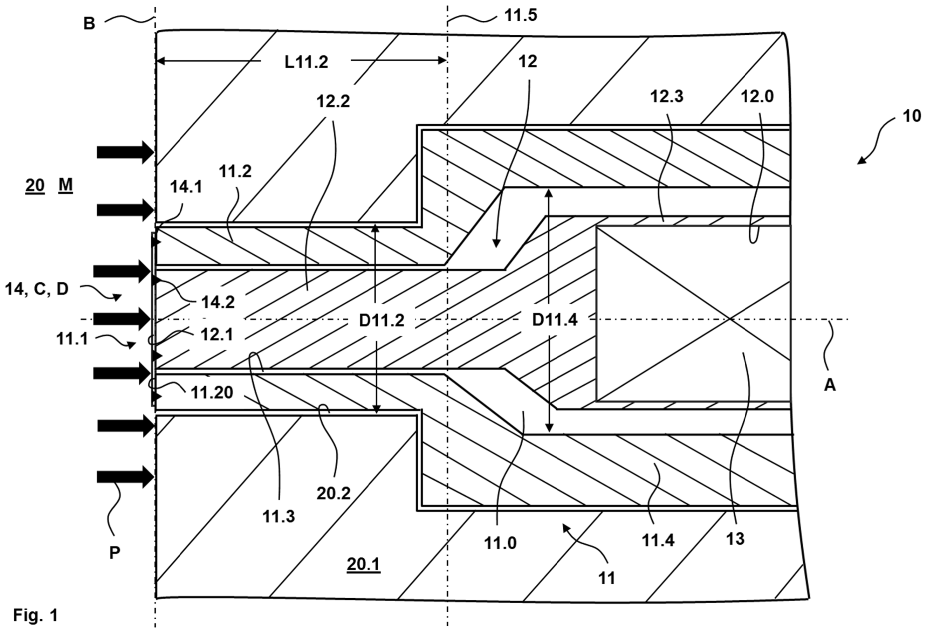

Die Fig. 1 bis 3 zeigen Querschnitte durch Teile von drei Ausführungsformen eines erfindungsgemässen Drucksensors 10. Die Querschnitte erfolgen entlang einer Längsachse A des Drucksensors 10. Nachfolgend wird eine Richtung parallel zur Längsachse A als Längsrichtung bezeichnet. Eine Richtung senkrecht zur Längsachse A wird als Radialrichtung bezeichnet.

### DER DRUCKRAUM 20

Der Drucksensor 10 hat die Funktion, den Druck P eines Mediums M in einem Druckraum 20 zu messen.

Der Druckraum 20 kann sich in einem Spritzgiesswerkzeug, in einem Verbrennungsmotor, usw. befinden. Der Druckraum 20 weist eine Wandung 20.1 auf. Die Wandung 20.1 ist aus einem widerstandsfähigen, metallischen Material wie ein hochlegierter Edelstahl. Die Wandung 20.1 umschliesst den Druckraum 20 druckdicht. Im Sinne der Erfindung bedeutet das Adjektiv "druckdicht", dass das Medium M nicht durch die Wandung 20.1 nach ausserhalb des Druckraumes 20 entweichen kann. Der Druckraum 20 kann ein Aufbewahrungsbehälter für das Medium M, ein Spritzgiesswerkzeug mit dem Medium M, ein Verbrennungsmotor mit dem Medium M, usw. sein.

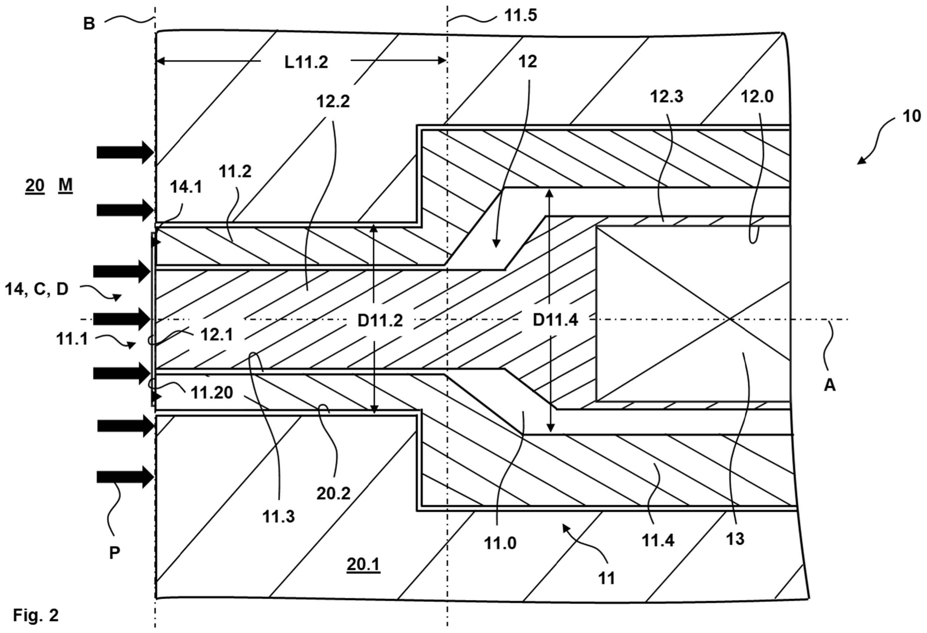

Das Medium M kann gasförmig und/oder flüssig sein. Bei einem Spritzgiesswerkzeug ist das Medium M eine flüssige Schmelze, welche aus mindestens einem der Materialien Kunststoff oder Metall besteht. Bei einem Verbrennungsmotor ist das Medium M ein Kraftstoff-Luft-Gemisch. Das Medium M kann eine hohe Temperatur von mehreren hundert °C und einen Druck P von mehreren tausend bar haben. Vorzugsweise liegt die Temperatur im Bereich von 100 °C bis 500 °C und der Druck P liegt im Bereich von 50 bar bis 5000 bar. Der zu messende Druck P ist in den Fig. 1 und 2 schematisch als schwarze Pfeile dargestellt.

Zur Messung des Druckes P weist die Wandung 20.1 eine Messbohrung 20.2 auf. Die Messbohrung 20.2 ist eine Durchgangsöffnung, welche sich in Längsrichtung von ausserhalb des Druckraumes 20 zum Druckraum 20 erstreckt. Im Druckraum 20 endet die Messbohrung 20.2 in einer Druckaufnahmeebene B der Wandung 20.1.

Der Drucksensor 10 weist ein Gehäuse 11, ein Stempelelement 12 und mindestens ein Messelement 13 auf.

### DAS GEHÄUSE 11

Das Gehäuse 11 hat die erste Funktion, den Drucksensor 10 in der Messbohrung 20.2 der Wandung 20.1 des Druckraumes 20 zu montieren. Das Gehäuse 11 hat die zweite Funktion, das Stempelelement 12 und das Messelement 13 aufzunehmen.

Das Gehäuse 11 ist aus einem widerstandsfähigen, metallischen Material wie ein hochlegierter Edelstahl gefertigt. Das Gehäuse 11 ist hohlzylinderförmig. Gemäss Fig. 1 bis 3 erstreckt sich das Gehäuse 11 in Längsrichtung. Das Gehäuse 11 weist einen Gehäuseraum 11.0 auf. Der Gehäuseraum 11.0 wird in Radialrichtung vom Material des Gehäuses 11 begrenzt. Das Stempelelement 12 und das Messelement 13 sind im Gehäuseraum 11.0 angeordnet.

Das Gehäuse 11 weist ein Montagemittel auf. Das Montagemittel ist eingerichtet, eine mechanische Verbindung mit der Wandung 20.1 zu bilden. Das Montagemittel kann eine Schraubverbindung sein. Das Montagemittel ist figürlich nicht dargestellt.

Das Gehäuse 11 weist ein Gehäuseende 11.2 und einen Gehäusebereich 11.4 auf. Das Gehäuseende 11.2 und der Gehäusebereich 11.4 gehen in einem Gehäuseübergangsbereich 11.5 ineinander über. Das Gehäuseende 11.2 und der Gehäusebereich 11.4 sind aus dem Material des Gehäuses 11 gefertigt. Im montierten Zustand des Drucksensors 10 ragt das Gehäuse 11 mit dem Gehäuseende 11.2 von ausserhalb des Druckraumes 20 in die Messbohrung 20.2 und steht im Kontakt mit dem Medium M. Das Gehäuseende 11.2 wird deshalb auch als druckraumnahes Gehäuseende 11.2 bezeichnet. Das druckraumnahe Gehäuseende 11.2 weist einen Durchmesser D112 auf. Vorzugsweise ist der Durchmesser D112 des druckraumnahen Gehäuseendes 11.2 kreisrund. Das druckraumnahe Gehäuseende 11.2 endet in einer Gehäusestossfläche 11.20.

Am druckraumnahen Gehäuseende 11.2 ist eine Gehäuseöffnung 11.1 angeordnet. Die Gehäuseöffnung 11.1 wird in Radialrichtung von der Gehäusestossfläche 11.20 begrenzt. Durch die Gehäuseöffnung 11.1 steht das Stempelelement 12 in Kontakt mit dem Medium M. Gemäss Fig. 1 bis 3 liegt das druckraumnahe Gehäuseende 11.2 mit der Gehäusestossfläche 11.20 und der Gehäuseöffnung 11.1 in der Druckaufnahmeebene B. Vorzugsweise aber nicht zwingenderweise erstreckt sich die Druckaufnahmeebene B in Radialrichtung senkrecht zur Längsrichtung. Bei Kenntnis der vorliegenden Erfindung kann der Fachmann die Druckaufnahmeebene in einem beliebigen Winkel schräg zur Längsachse des Drucksensors realisieren.

Das druckraumnahe Gehäuseende 11.2 weist eine Länge L112 auf. Die Länge L112 des druckraumnahen Gehäuseende 11.2 erstreckt sich in Längsrichtung von der Druckaufnahmeebene B bis zum Gehäuseübergangsbereich 11.5.

Im montierten Zustand des Drucksensors 10 ist der Gehäusebereich 11.4 druckraumfern angeordnet und wird deshalb auch als druckraumferner Gehäusebereich 11.4 bezeichnet. Der druckraumnahe Gehäusebereich 11.4 weist einen Durchmesser D114 auf. Vorzugsweise ist der Durchmesser D114 des druckraumnahen Gehäusebereiches 11.4 kreisrund. Gemäss Fig. 1 bis 3 ist der Durchmesser D112 des druckraumnahen Gehäuseendes 11.2 in Radialrichtung kleiner als der Durchmesser D114 des druckraumfernen Gehäusebereiches 11.4.

### DAS STEMPELELEMENT 12

Das Stempelelement 12 hat die erste Funktion, den zu messenden Druck P aufzunehmen und auf das Messelement 13 zu übertragen. Das Stempelelement 12 hat die zweite Funktion zu verhindern, dass mechanische Verspannungen, welche von der Befestigung des Drucksensors 10 in der Bohrung 20.2 der Wandung 20.1 stammen, nicht vom Gehäuse 11 zum Messelement 13 gelangen, denn solche mechanische Verspannungen können die Messung des Druckes P verfälschen.

Das Stempelelement 12 ist aus einem widerstandsfähigen, metallischen Material wie ein hochlegierter Edelstahl gefertigt. Gemäss Fig. 1 bis 3 erstreckt sich das Stempelelement 12 auf der Längsachse A.

Das Stempelelement 12 weist einen Stempelkörper 12.2 und eine Stempelhülse 12.3 auf. Vorzugsweise aber nicht zwingenderweise sind der Stempelkörper 12.2 und die Stempelhülse 12.3 einstückig aus dem Material des Stempelelements 12 gefertigt. Der Stempelkörper 12.2 und die Stempelhülse 12.3 sind im Gehäuseraum 11.0 angeordnet, welcher vom druckraumfernen Gehäusebereich 11.4 umgeben ist.

Der Stempelkörper 12.2 ist zylinderförmig. Die Stempelhülse 12.3 ist hohlzylinderförmig und umschliesst in Radialrichtung einen Stempelhülsenraum 12.4. Im Stempelhülsenraum 12.4 ist das Messelement 13 angeordnet.

Das Stempelelement 12 erstreckt sich im Gehäuseraum 11.0 in Längsrichtung zur Gehäuseöffnung 11.1 am druckraumnahen Gehäuseende 11.2. Das Stempelelement 12 weist eine Stempelstossfläche 12.1 auf. Vorzugsweise weist die Stempelstossfläche 12.1 einen kreisrunden Durchmesser auf. Gemäss Fig. 1 und 2 endet das Stempelelement 12 mit der Stempelstossfläche 12.1 in der Gehäuseöffnung 11.1. Vorzugsweise aber nicht zwingenderweise liegt die Stempelstossfläche 12.1 in der Druckaufnahmeebene B.

Über die Stempelstossfläche 12.1 steht das Stempelelement 12 im Kontakt mit dem Medium M. Der zu messende Druck P wirkt auf die Stempelstossfläche 12.1. Die Stempelstossfläche 12.1 nimmt den Druck P auf. Das Stempelelement 12 steht über den Stempelkörper 12.2 mit dem Messelement 13 in Wirkverbindung und überträgt den Druck P in Längsrichtung auf das Messelement 13. Dazu ist das Stempelelement 12 im Gehäuseraum 11.0 in Längsrichtung beweglich angeordnet.

Vorzugsweise ist der Durchmesser D112 des druckraumnahen Gehäuseendes 11.2 kleiner/gleich 2 mm, vorzugsweise kleiner/gleich 4 mm. Mit einem derart kleinen Durchmesser des druckraumnahen Gehäuseendes 11.2 benötigt die Stempelstossfläche 12.1 zur Aufnahme des Druckes P ein Minimum an Platz, was gerade bei den beengten Platzverhältnissen bei einem Spritzgiesswerkzeug oder bei einem Verbrennungsmotor für eine einfache Montage des Drucksensors 10 in der Messbohrung 20.2 von grosser Bedeutung ist.

Das Stempelelement 12 ist im Gehäuseraum 11.0 durch einen Ringspalt 11.3 beabstandet vom Gehäuse 11 angeordnet. Der Ringspalt 11.3 erstreckt sich im Gehäuseraum 11.0 in Längsrichtung zwischen dem Gehäuse 11 und dem Stempelelement 12. Der Ringspalt 11.3 verhindert weitgehend, dass im montierten Zustand des Drucksensors 10 mechanische Verspannungen, welche von der Montage des Drucksensors 10 über das Montagemittel mit der Wandung 20.1 stammen, über das Gehäuse 11 zum Messelement 13 gelangen. Der Ringspalt 11.3 erstreckt sich im Gehäuseraum 11.0 bis zur Gehäuseöffnung 11.1.

### DAS MESSELEMENT 13

Das Messelement 13 hat die Funktion für den zu messenden Druck P ein Messsignal zu erzeugen.

Das Messelement 13 kann ein piezoelektrisches Messelement, ein piezoresistives Messelement, ein Dehnungsmessstreifen, usw. sein. Eine Grösse des Messsignals ist proportional zum gemessenen Druck P. Das Messsignal wird zu einer figürlich nicht dargestellten Auswerteieinheit zur Auswertung abgeleitet.

Vorzugsweise ist der Durchmesser D114 des druckraumfernen Gehäusebereiches 11.4 mindestens doppelt so gross wie der Durchmesser D112 des druckraumnahen Gehäuseendes 11.2. Das Messelement 12 ist im druckraumfernen Gehäusebereich 11.4 angeordnet. Der im Vergleich zum Durchmesser D112 des druckraumnahen Gehäuseende 11.2 grosse Durchmesser D114 des druckraumfernen Gehäusebereichs 11.4 bringt den Vorteil, dass auch ein entsprechend gross dimensioniertes Messelement 12 verwendet werden kann. Unter der Annahme, dass die Empfindlichkeit des Messelements 12 mit seiner Dimension steigt, erfolgt die Messung des Druckes P somit mit hoher Empfindlichkeit, während die Stempelstossfläche 12.1 am druckraumnahen Gehäuseende 11.2 ein Minimum an Platz benötigt.

Vorzugsweise ist die Länge L112 des druckraumnahen Gehäuseendes 11.2 mindestens zehnmal so gross wie der Durchmesser D112 des druckraumnahen Gehäuseendes 11.2. Die im Vergleich zum Durchmesser D112 des druckraumnahen Gehäuseende 11.2 grosse Länge L112 des druckraumnahen Gehäuseendes 11.2 bringt den Vorteil, dass die hohen Temperatur von mehreren hundert °C des Mediums M aufgrund der begrenzten Wärmeleitfähigkeit des Materials des Stempelelements 12 abgeschwächt auf das Messelement 13 wirkt. Vorzugsweise ist die Länge L112 des druckraumnahen Gehäuseendes 11.2 so ausgelegt, dass die hohe Temperatur des Mediums M nicht nachteilig auf das Messelement 13 wirkt. Im Sinne der Erfindung hat das Adjektiv "nachteilig" die Bedeutung, dass das Messsignal verfälscht und/oder die Lebensdauer des Messelements 13 verkürzen wird. So können Bestandteile des Messelements 13 bei hohen Temperaturen ausgasen, welche Gase sich an elektrischen Kontaktoberflächen des Messelements 13 lokal vernetzen und dort Ablagerungen bilden. Und es kann bei hohen Temperaturen zur Diffusion von unedlen Metallen und zum lokalen Aufbau von Oxidschichten an den elektrischen Kontaktoberflächen des Messelements 13 kommen. Diese Effekte können einzeln oder kombiniert auftreten. In der Folge kann sich der elektrische Widerstand bei der Ableitung des Messsignals verändern. So kann der elektrische Kontaktwiderstand aus dem mΩ-Bereich um mehrere Grössenordnungen in den MΩ-Bereich ansteigen und das Messsignal verfälschen, was zu einer fehlerhaften Auswertungen des Messignals führt. Generell ist eine Sicherstellung einer elektrischen Isolation der Ableitung des Messignals auch bei hohen Temperaturen sehr wichtig, denn es können sich an Bestandteilen des Messelements 13 elektrische Kriechströme einstellen und so ebenfalls die Ableitung des Messsignals verfälschen. Auch können bei hohen Temperaturen unterschiedliche Ausdehnungskoeffizienten der Bestandteile des Messelements 13 lokal zu mechanischen Spannungen führen. Schliesslich können die Bestandteile des Messelements 13 bei hohen Temperaturen vorzeitig altern.

### DAS FOLIENELEMENT 14, 14'

Erfindungsgemäss weist der Drucksensor 10 mindestens ein Folienelement 14, 14' auf.

Das Folienelement 14, 14' hat die Funktion, den Ringspalt 11.3 gegen ein Eindringen von Medium M abzudichten. Im Sinne der Erfindung hat das Verb "abdichten" die Bedeutung, dass im Betrieb des Drucksensors 10 kein Medium M in den Ringspalt 11.3 gelangen kann.

Das Folienelement 14, 14' ist aus einem widerstandsfähigen, metallischen Material wie ein hochlegierter Edelstahl gefertigt.

Das Folienelement 14, 14' weist eine flächige Ausdehnung C und eine Dicke D auf. Gemäss Fig. 1 bis 3 erstreckt sich die flächige Ausdehnung C des Folienelements 14, 14' parallel zur Radialrichtung und die Dicke D des Folienelements 14, 14' erstreckt sich parallel zur Längsrichtung. Vorzugsweise ist die flächige Ausdehnung C des Folienelements 14, 14' um mindestens eine Grössenordnung grösser als die Dicke D des Folienelements 14, 14'. Vorzugsweise ist die Dicke D des Folienelements 14, 14' kleiner/gleich 100 µm, vorzugsweise kleiner/gleich 50 µm, vorzugsweise kleiner/gleich 25 µm.

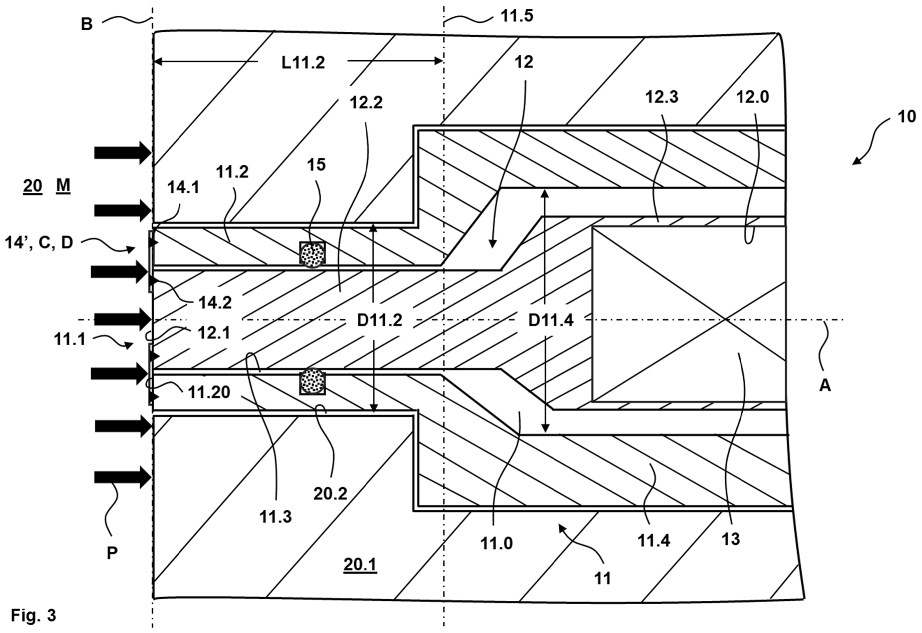

In der ersten und zweiten Ausführungsform des Drucksensors 10 gemäss Fig. 1 und 2 ist das Folienelement 14 scheibenförmig ausgebildet. In der dritten Ausführungsform des Drucksensors 10 gemäss Fig. 3 ist das Folienelement 14' ringförmig ausgebildet.

Das Folienelement 14, 14' verschliesst die Gehäuseöffnung 11.1 und den Ringspalt 11.3 gegen ein Eindringen von Medium M. Vorzugsweise ist das Folienelement 14, 14' in der Druckaufnahmeebene B angeordnet. Vorzugsweise weist das Folienelement 14, 14' einen ersten Bereich und einen zweiten Bereich auf.

Das Folienelement 14, 14' dichtet den Ringspalt 11.3 dauerhaft bei einer Temperatur im Bereich von 100 °C bis 500 °C sowie bei einem Druck P im Bereich von 50 bar bis 5000 bar druckdicht ab.

In allen drei Ausführungsformen des Drucksensors 10 gemäss Fig. 1 bis 3 ist das Folienelement 14, 14' am druckraumnahen Gehäuseende 11.2 befestigt. Vorzugsweise ist Folienelement 14, 14' in der Druckaufnahmeebene B am druckraumnahen Gehäuseende 11.2 befestigt. Vorzugsweise ist das Folienelement 14, 14' mit dem ersten Bereich an der Gehäusestossfläche 11.20 des druckraumnahen Gehäuseendes 11.2 befestigt.

In der zweiten Ausführungsform des Drucksensors 10 gemäss Fig. 2 ist das Folienelement 14, 14' nur am druckraumnahen Gehäuseende 11.2 befestigt. Dadurch, dass das Folienelement 14, 14' nicht am Stempelelement 12 befestigt ist, kann das Folienelement 14, 14' bei der Messung des Druckes P nicht die Beweglichkeit des Stempelelements 12 beeinträchtigen und somit auch nicht die Empfindlichkeit des Drucksensors 10 reduzieren. Auch wird das nicht am Stempelelement 12 befestigte Folienelement 14, 14' durch die Bewegung des Stempelelements 12 nicht ausgelenkt. Gerade bei einem hohen Druck P von bis zu 5000 bar und für ein Folienelement 14, 14' mit geringer Dicke kann die Auslenkung des Folienelements 14, 14' zu einer unerwünschten plastischen Verformung des Folienelements 14, 14' führen und die Lebensdauer des Drucksensors 10 verkürzen.

In der ersten und dritten Ausführungsform des Drucksensors 10 gemäss Fig. 1 und 3 ist das Folienelement 14, 14' zusätzlich am Stempelelement 12 befestigt. Vorzugsweise ist Folienelement 14, 14' in der Druckaufnahmeebene B am druckraumnahen Gehäuseende 11.2 und am Stempelelement 12 befestigt. Vorzugsweise ist das Folienelement 14, 14' mit dem ersten Bereich an der Gehäusestossfläche 11.20 des druckraumnahen Gehäuseendes 11.2 und mit dem zweiten Bereich an der Stempelstossfläche 12.1 des Stempelelements 12 befestigt. Die zusätzliche Befestigung des Folienelements 14, 14' am Stempelelement 12 gewährleistet eine mechanisch stabile und dauerhafte Anordnung des Folienelements 14, 14' beim Verschliessen und Abdichten des Ringspalts 11.3 gegen ein Eindringen von Medium M.

Die Befestigung des Folienelements 14, 14' erfolgt über eine stoffschlüssige Verbindung. Gemäss Fig. 1 bis 3 ist die stoffschlüssige Verbindung als Schweissnaht 14.1, 14.2 ausgebildet. Die Schweissnaht 14.1, 14.2 umfasst eine erste Schweissnaht 14.1 und eine zweite Schweissnaht 14.2.

In der zweiten Ausführungsform des Drucksensors 10 gemäss Fig. 2 befestigt nur die erste Schweissnaht 14.1 den ersten Bereich des Folienelements 14, 14' an der Gehäusestossfläche 11.20 des druckraumnahen Gehäuseendes 11.2. Die erste Schweissnaht 14.1 ist vorzugsweise ringförmig.

In der ersten und dritten Ausführungsform des Drucksensors 10 gemäss Fig. 1 und 3 befestigt die erste Schweissnaht 14.1 den ersten Bereich des Folienelements 14, 14' an der Gehäusestossfläche 11.20 des druckraumnahen Gehäuseendes 11.2 und die zweite Schweissnaht 14.2 befestigt den zweiten Bereich des Folienelements 14, 14' an der Stempelstossfläche 12.1 des Stempelelements 12. Die erste Schweissnaht 14.1 ist vorzugsweise ringförmig, die zweite Schweissnaht 14.2 ist vorzugsweise ringförmig oder punktförmig.

### DAS DICHTELEMENT 15

Die dritte Ausführungsform des Drucksensors 10 gemäss Fig. 3 weist mindestens ein Dichtelement 15 auf.

Das Dichtelement 15 hat die Funktion, den Ringspalt 11.3 zusätzlich zur Abdichtung durch das Folienelement 14, 14' abzudichten. Die zusätzliche Abdichtung des Ringspalts 11.3 durch das Dichtelement 15 stellt sicher, dass bei einem Bruch oder Riss des Folienelements 14, 14' das Medium M nicht durch den Ringspalt 11.3 in den Gehäuseraum 11.0 eindringt und dort das Messelement 13 beschädigt oder zerstört. Die zusätzliche Abdichtung des Ringspalts 11.3 durch das Dichtelement 15 ist für die Belange der Erfindung nicht zwingend.

Das Dichtelement 15 ist in einer Nut des druckraumnahen Gehäuseendes 11.2 angeordnet.

Die Nut ist bezüglich der Längsachse A radial innenseitig im druckraumnahen Gehäuseende 11.2 angeordnet. Die Nut ist ringförmig. Die Nut weist mehrere Nutenwände auf. Gemäss Fig. 3 ist die Nut im Querschnitt rechteckig. In Radialrichtung zum Ringspalt 11.3 und zum Stempelelement 12 hin ist die Nut offen. Bei Kenntnis der vorliegenden Erfindung kann der Fachmann die Nut mit anderen Geometrien der Nut, wie mit einem dreieckigem Querschnitt, mit einem trapezförmigen Querschnitt, mit einem runden Querschnitt, einem halbrunden Querschnitt, usw. realisieren.

Das Dichtelement 15 ist torusförmig und besteht aus elastisch dichtendem Material wie aus Elastomer, insbesondere aus Fluorelastomer oder aus Perfluorelastomer, aus Kautschuk, insbesondere aus Acrylnitril-Butadien-Kautschuk, usw.

Das in der Nut angeordnete Dichtelement 15 dichtet den Ringspalt 11.3 durch Dichtpressung gegen das Stempelelement 12 ab. Die Dichtpressung kann als axiale Dichtpressung in Längsrichtung, oder als radiale Dichtpressung senkrecht in Radialrichtung, oder als eine Kombination aus axialer Dichtpressung in Längsrichtung und radialer Dichtpressung in Radialrichtung erfolgen.

Vorzugsweise ist das Dichtelement 15 mit einer Vorpressung in der Nut angeordnet. Die Vorpressung wird von den Nutenwände auf das Dichtelement 15 ausgeübt. Falls Bruch oder Riss des Folienelements 14, 14' das Medium M in den Ringspalt 11.3 eindringt, wirkt zusätzlich zur Vorpressung auch der Druck P des Mediums M im Ringspalt 30.4 als Druckpressung auf das Dichtelement 15. Die Abdichtung des Ringspalts 11.3 wird dann zusätzlich zur Dichtpressung und der Vorpressung auch durch die Druckpressung gebildet.

Das Dichtelement 15 kann in Längsrichtung in einigen mm Entfernung von der Gehäusestossfläche 11.20 angeordnet sein, was den Vorteil bringt, dass ein Medium M mit niedriger Viskosität in Längsrichtung nicht weit in den Ringspalt 11.3 eindringen kann, bevor es auf das Dichtelement 15 stösst.

Das Dichtelement 15 kann in Längsrichtung in einigen cm Entfernung von der Gehäusestossfläche 11.20 angeordnet sein, was den Vorteil bringt, dass bei einem Medium M mit hoher Temperatur das Dichtelement 15 im Betrieb des Drucksensors 10 nicht der hohen Temperatur des Mediums M ausgesetzt ist, da die Temperatur in der Wandung 20.1 und somit auch im druckraumnahen Gehäuseende 11.2 mit steigender Entfernung zum Druckraum 20 abnimmt.

Das Dichtelement 15 dichtet den Ringspalt 11.3 dauerhaft bei einer Temperatur im Bereich von 100 °C bis 500 °C sowie bei einem Druck P im Bereich von 50 bar bis 5000 bar druckdicht ab.

Bei Kenntnis der vorliegenden Erfindung kann der Fachmann mehrere Nuten im druckraumnahen Gehäuseende für mehrere Dichtelemente realisieren.

Bei Kenntnis der vorliegenden Erfindung kann der Fachmann die drei Ausführungsformen des Drucksensors 10 gemäss Fig. 1 bis 3 miteinander kombinieren. So kann auch die erste und zweite Ausführungsform des Drucksensors gemäss Fig. 1 und 2 zusätzlich ein Dichtelement aufweisen.

### Bezugszeichenliste

- 10: Drucksensor
- 11: Gehäuse
- 11.0: Gehäuseraum
- 11.1: Gehäuseöffnung
- 11.2: druckraumnahes Gehäuseende
- 11.20: Gehäusestossfläche
- 11.3: Ringspalt
- 11.4: druckraumferner Gehäusebereich
- 11.5: Gehäuseübergangsbereich
- 12: Stempelelement
- 12.1: Stempelstossfläche
- 12.2: Stempelkörper
- 12.3: Stempelhülse
- 12.0: Stempelhülsenraum
- 13: Messelement
- 14, 14': Folienelement
- 14.1: erste Schweissnaht
- 14.2: zweite Schweissnaht
- 15: Dichtelement
- 20: Druckraum
- 20.1: Wandung
- 20.2: Messbohrung
- A: Längsachse
- B: Druckaufnahmeebene
- C: Ausdehnung
- D: Dicke
- D112: Durchmesser des druckraumnahen Gehäuseendes
- D114: Durchmesser des druckraumfernen Gehäusebereiches
- L112: Länge des druckraumnahen Gehäuseendes
- M: Medium
- P: Druck

## Patentansprüche

1. Drucksensor (10) zur Messung des Druckes (P) eines Mediums (M) in einem Druckraum (20); welcher Druckraum (20) von einer Wandung (20.1) druckdicht umschlossen ist, welche Wandung (20.1) eine Messbohrung (20.2) aufweist, welche Messbohrung (20.2) von ausserhalb des Druckraumes (20) bis zum Druckraum (20) reicht; welcher Drucksensor (10) ein Gehäuse (11), ein Stempelelement (12) und ein Messelement (13) aufweist; welches Gehäuse (11) einen Gehäuseraum (11.0) und eine Gehäuseöffnung (11.1) aufweist; welches Stempelelement (12) und welches Messelement (13) im Gehäuseraum (11.0) angeordnet sind; welcher Drucksensor (10) an der Messbohrung (20.2) montierbar ist, welches Gehäuse (11) im montierten Zustand des Drucksensors (10) mit einem druckraumnahen Gehäuseende (11.2) von ausserhalb des Druckraumes (20) in die Messbohrung (20.2) ragt, welche Gehäuseöffnung (11.1) am druckraumnahen Gehäuseende (11.2) angeordnet ist; welches Stempelelement (12) sich im Gehäuseraum (11.0) in einer Längsrichtung des Drucksensors (10) zur Gehäuseöffnung (11.1) erstreckt, welcher Druck (P) durch die Gehäuseöffnung (11.1) auf das Stempelelement (12) wirkt, welches Stempelelement (12) mit dem Messelement (13) in Wirkverbindung steht und den Druck (P) auf das Messelement (13) überträgt; mit einem Ringspalt (11.3), welcher sich im Gehäuseraum (11.0) in der Längsrichtung zwischen dem Gehäuse (11) und dem Stempelelement (12) erstreckt;
**dadurch gekennzeichnet,**
**dass** der Drucksensor (10) mindestens ein Folienelement (14, 14') aufweist, welches Folienelement (14, 14') am druckraumnahen Gehäuseende (11.2) befestigt ist und welches Folienelement (14, 14') den Ringspalt (11.3) gegen ein Eindringen von Medium (M) verschliesst.

2. Drucksensor (10) gemäss Anspruch 1, **dadurch gekennzeichnet, dass** sich der Ringspalt (11.3) im Gehäuseraum (11.0) bis zur Gehäuseöffnung (11.1) erstreckt; und dass das Folienelement (14, 14') die Gehäuseöffnung (11.1) gegen ein Eindringen von Medium (M) verschliesst.

3. Drucksensor (10) gemäss einem der Ansprüche 1 bis 2, **dadurch gekennzeichnet, dass** das Folienelement (14) scheibenförmig ausgebildet ist oder dass das Folienelement (14') ringförmig ausgebildet ist.

4. Drucksensor (10) gemäss einem der Ansprüche 1 bis 3, **dadurch gekennzeichnet, dass** das Folienelement (14, 14') eine flächige Ausdehnung (C) und eine Dicke (D) aufweist; und dass die flächige Ausdehnung (C) des Folienelements (14, 14') um mindestens eine Grössenordnung grösser als die Dicke (D) des Folienelements (14, 14') ist.

5. Drucksensor (10) gemäss Anspruch 4, **dadurch gekennzeichnet, dass** die Dicke (D) des Folienelements (14, 14') kleiner/gleich 100 µm, vorzugsweise kleiner/gleich 50 µm, vorzugsweise kleiner/gleich 25 µm ist.

6. Drucksensor (10) gemäss einem der Ansprüche 1 bis 5, **dadurch gekennzeichnet, dass** das druckraumnahe Gehäuseende (11.2) in einer Gehäusestossfläche (11.20) endet; und dass das Folienelement (14) an der Gehäusestossfläche (11.20) des druckraumnahen Gehäuseendes (11.2) befestigt ist.

7. Drucksensor (10) gemäss Anspruch 6, **dadurch gekennzeichnet, dass** die Gehäusestossfläche (11.20) des druckraumnahen Gehäuseendes (11.2) in einer Druckaufnahmeebene (B) liegt; und dass das Folienelement (14) in der Druckaufnahmeebene (B) angeordnet ist.

8. Drucksensor (10) gemäss einem der Ansprüche 6 oder 7, **dadurch gekennzeichnet, dass** das Folienelement (14) über eine stoffschlüssige Verbindung am druckraumnahen Gehäuseende (11.2) befestigt ist; dass die stoffschlüssige Verbindung als erste Schweissnaht (14.1) ausgebildet ist, dass die erste Schweissnaht (14.1) das Folienelement (14) an der Gehäusestossfläche (11.20) des druckraumnahen Gehäuseendes (11.2) befestigt.

9. Drucksensor (10) gemäss einem der Ansprüche 1 bis 5, **dadurch gekennzeichnet, dass** das druckraumnahe Gehäuseende (11.2) in einer Gehäusestossfläche (11.20) endet; dass das Stempelelement (12) in einer Stempelstossfläche (12.1) endet; dass das Folienelement (14, 14') einen ersten Bereich und einen zweiten Bereich aufweist; dass das Folienelement (14, 14') mit dem ersten Bereich an der Gehäusestossfläche (11.20) des druckraumnahen Gehäuseendes (11.2) befestigt ist und dass das Folienelement (14, 14') mit dem zweiten Bereich an der Stempelstossfläche (12.1) des Stempelelements (12) befestigt ist.

10. Drucksensor (10) gemäss Anspruch 9, **dadurch gekennzeichnet, dass** die Gehäusestossfläche (11.20) des druckraumnahen Gehäuseendes (11.2) und die Stempelstossfläche (12.1) des Stempelelements (12) in einer Druckaufnahmeebene (B) liegen; und dass das Folienelement (14, 14') in der Druckaufnahmeebene (B) angeordnet ist.

11. Drucksensor (10) gemäss einem der Ansprüche 9 oder 10, **dadurch gekennzeichnet, dass** das Folienelement (14, 14') über eine stoffschlüssige Verbindung am druckraumnahen Gehäuseende (11.2) und am Stempelelement (12) befestigt ist; dass die stoffschlüssige Verbindung als Schweissnaht (14.1, 14.2) ausgebildet ist, welche Schweissnaht (14.1, 14.2) eine erste Schweissnaht (14.1) und eine zweite Schweissnaht (14.2) umfasst; dass die erste Schweissnaht (14.1) den ersten Bereich des Folienelements (14, 14') an der Gehäusestossfläche (11.20) des druckraumnahen Gehäuseendes (11.2) befestigt; und dass die zweite Schweissnaht (14.2) den zweiten Bereich des Folienelements (14, 14') an der Stempelstossfläche (12.1) des Stempelelements (12) befestigt.

12. Drucksensor (10) gemäss einem der Ansprüche 7 oder 10, **dadurch gekennzeichnet, dass** das sich die Druckaufnahmeebene (B) in einer Radialrichtung senkrecht zur Längsrichtung erstreckt.

13. Drucksensor (10) gemäss einem der Ansprüche 1 bis 12, **dadurch gekennzeichnet, dass** der Drucksensor (10) mindestens ein Dichtelement (15) aufweist; welches Dichtelement (15) in einer Nut des druckraumnahen Gehäuseendes (11.2) angeordnet ist.

14. Drucksensor (10) gemäss Anspruch 13, **dadurch gekennzeichnet, dass** die Nut in Radialrichtung zum Ringspalt (11.3) und zum Stempelelement (12) hin offen ist; dass das Dichtelement (15) torusförmig ist und aus elastisch dichtendem Material besteht; und dass das in der Nut angeordnete Dichtelement (15) den Ringspalt (11.3) durch Dichtpressung gegen das Stempelelement (12) abdichtet.

15. Verwendung des Drucksensors (10) gemäss einem der Ansprüche 1 bis 14 in einer Spritzgiesswerkzeug mit einem Medium (M), welches aus mindestens einem der Materialien Kunststoff oder Metall besteht.
